# EUROPEAN PATENT APPLICATION

(11) **EP 4 215 745 A1**
(43) Date of publication of application: **26.07.2023**
(21) Application number: 22152784.9
(22) Date of filing: 21.01.2022
(51) Int. Cl.: F03D 17/00

(54) **WIND TURBINE CABLE CONNECTOR MONITORING METHOD AND DEVICE**

(71) Applicant: Ørsted Wind Power A/S, 7000 Fredericia (DK)
(72) Inventor: CWIKOWSKI, Oliver Nicholas, London, SW1P 1WG (GB); SIMMONDS, Adam, London, SW1P 1WG (GB); KASTRUP, Thomas, 2820 Gentofte (DK); KRISTENSEN, Søren Lindgaard, 2820 Gentofte (DK); JENSEN, Christopher Dam, 2820 Gentofte (DK); GAROLERA, Anna Candela, 2820 Gentofte (DK); KARAOLANIS, Aristeidis, 2514 AB Den Haag (NL)
(74) Representative: Gaunt, Thomas Derrick

(57) **Abstract**

Wind turbine cable connector monitoring method and device for monitoring a connector (1) attached to cable (4). A temperature sensor (6) is provided for sensing a measured temperature at a position a known distance along the cable (4) from the connector (1). A controller (8,19) records the measured temperature from the temperature sensor (6) while the connector (4) is in use, and identifies a potential fault condition in the connector (4) based on the measured temperature and the position the known distance along the cable (4) from the connector (1).

## Description

The present invention concerns a wind turbine cable connector monitoring method and a device for performing the same. The present disclosure is particularly relevant to wind turbine switchgear cable connectors, such as T-connectors, and to devices and methods for the remote monitoring of the switchgear cable connectors from the exterior of the switchgear assembly. The present disclosure is also particularly relevant to the monitoring of connectors for high or medium voltage cables.

Wind turbines include a switchgear located inside the base of the wind turbine tower which functions as a circuit breaker/fuse/disconnector device for protecting the electrical equipment inside the wind turbine in the event of a fault. The switchgear typically includes a circuit breaker connected to the wind turbine's main transformer and one or more cable ports for connecting the wind turbine to the collector grid.

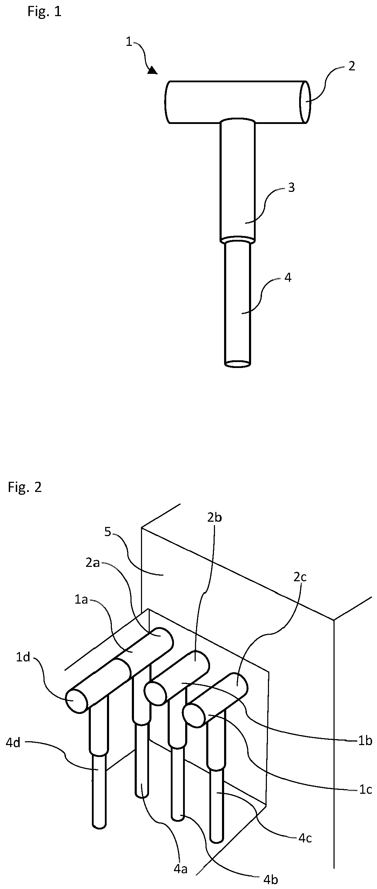

The connections into the switchgear are facilitated through a number of connectors, typically provided in the form of T-connectors, that are used to attach high voltage cables into the switchgear unit. Figure 1 shows an illustrative T-connector 1. The T-connector 1 comprises an interface part 2 which connects into a corresponding port on the switchgear, and a conductor connector part 3, which extends perpendicularly to the interface part 2 and connects into a high/medium voltage cable 4. The T-connector 1 can also be stacked with other T-connectors, whereby the interface part 2 of one T-connector 1 connects to the switchgear unit, and the other part of the T-connector connects to another T-connector. This stacking is often used to allow connections between wind turbines. The T-connector 1 is shrouded in an insulating jacket formed of, for example, a thick EPDM rubber layer to insulate the parts. The cable is also covered in an insulating outer sheath.

Figure 2 shows an isometric view of the front part of a switchgear unit 5 with the cover of the connector region of the switchgear assembly removed. In this illustration, four T-connectors 1a-d associated with four high/medium voltage cables 4a-d have been connected into the switchgear unit 5, with T-connectors 1a and 1d being connected in a stacked arrangement as described above. Although four T-connectors are shown here for the purpose of illustration, in practice switchgear units may attach to different numbers of T-connectors and associated cables. For instance, many arrangements may have three, six or nine T-connectors present, with sets of three being attached in a stacked configuration. As shown, the cables 4a-d are normally routed up from beneath the floor at the base of the wind turbine tower. As such, in the case of offshore wind turbines, a number of cables 4a-d will therefore typically be fed up through the transition piece of the wind turbine installation, where they connect into the switchgear through the interface parts 2a-d of their respective T-connectors 1a-d.

As very high-power loads are fed through the T-connectors 1, they are prone to failure. For example, in the event of a power surge or an underling issue in the connector itself, such as a manufacturing defect or an installation issue, or a combination of these factors, the high voltages and currents can result in arcing and heating between parts within the T-connector, leading to mechanical damage, for example between the internal linkage between the interface 2 and conductor connector 3 parts or in the insulating jacket surrounding these components. Furthermore, relatively minor initial defects, for instance arising from manufacturing, contamination, or workmanship, can increase the resistance between parts, leading to hotspots and progressive further damage over time. Although T-connectors will be inspected during routine maintenance, more minor or underlying damage may not be immediately identified, and hence it will often not be until the T-connector fails entirely that a problem is discovered.

In instances where a T-connector does fail, it will need to be replaced before operation of the wind turbine can be restored. This presents an issue because the affected wind turbine generator must be throttled down and brought offline before the defective T-connector can be disconnected, detached from its respective cable, and a new connector can be fitted. This can also affect neighbouring turbines on the same string as the failed wind turbine. Such a repair operation requires a specialist, high voltage authorised, repair technician to visit the site, which can take time to schedule, particularly in the case of offshore wind turbines. Consequently, T-connector faults can lead to extended periods where the wind turbine is out of service, which can be expensive. This issue is further exacerbated because a fault at one wind turbine may potentially affect other wind turbines connected on the same cabling string.

The present invention seeks to address the above issues.

According to a first aspect of the present invention, there is provided a wind turbine cable connector monitoring method for monitoring a connector attached to a cable, the method comprising the steps of: sensing a measured temperature at a position on the cable a known distance along the cable from the connector while the connector is in use; and identifying a potential fault condition in the connector based on the measured temperature and the position.

In this way, a potential fault in the connector, such as a switchgear T-connector, may be identified pre-emptively based on temperature measurements taken on the attached cable, remote to the connector. That is, the method may identify damage occurring at the connector based on the heat conducted through the cable by accounting for heat propagation properties of the cable material. This allows for the integrity of the connectors to be monitored at a distance away from the switchgear assembly, such as in a different compartment. As such, the sensors for monitoring may be fitted without needing a specialist, high voltage accredited, technician, and without compromising the switchgear assembly itself. When a potential fault condition is identified, a proactive maintenance operation to replace or repair the connector may then be scheduled. This may thereby help to minimise downtime and avoid the risk of potential damage to other turbine components, which could otherwise occur in an uncontrolled breakdown scenario.

In embodiments, the method further comprises the step of generating an alert in response to the identification of the potential fault condition. In this way, an operator or a repair technician may be automatically alerted to the need to investigate the status of a connector. For example, in embodiments the alert may be a remote alert for remote monitoring of the connector status.

In embodiments, the potential fault condition comprises one or more of: the connector's temperature exceeding a first threshold, and the connector's temperature exceeding a second threshold for a predetermined duration. In this way, the measured temperature may be used as a proxy for the temperature at the connector to identify instances where the connector is subjected to temperature conditions that may result in damage or have arisen because of damage. In embodiments, the step of identifying a potential fault condition comprises identifying a difference in a change of the measured temperature compared to a concurrent change in measured temperature associated with another connector. As such, a relative temperature difference between one connector's temperature and the temperature of another associated connector, such as one connected to the same switchgear, may be used to identify a potential fault condition. In this way, relative temperature differences between connectors connected to a common unit may be used to identify instances where one of the connectors is subjected to temperature conditions that may result in damage or have arisen because of damage.

In embodiments, the step of identifying a potential fault condition comprises the step of estimating the connector temperature using the measured temperature and the position. In this way, the measured temperature is used to determine an estimate of the temperature at the connector for monitoring whether it exceeds a safe operating temperature. In embodiments, the potential fault condition comprises one or more of: the estimated connector temperature exceeding a first threshold, and the estimated connector's temperature exceeding a second threshold for a predetermined duration.

In embodiments, the step of estimating the estimated connector temperature comprises translating the measured temperature to the estimated connector temperature using a model.

In embodiments, the model may comprise a lookup table calculated based on test data. In this way, a simple model is provided for minimising processing requirements.

In embodiments, the model accounts for one or more of the heat propagation properties of the cable, the heat properties of the cable material, ambient temperature conditions, a detected rate of change in measured temperature, and power, current or voltage carried by the cable. In this way, a more advanced model may be provided for improved correlation between the estimated connector temperature and the actual prevailing operating temperature of the connector.

In embodiments, the model is a machine learning model trained based on test data. The test data may be derived using a sample connector and cable, with cable temperature measurements taken while the connector is subjected to known temperature conditions. The machine learning algorithm may then be used to develop the model based on the thermal response between the applied connector temperature and the measured temperature at the cable.

According to a second aspect of the invention, there is provided a wind turbine cable connector monitoring device for monitoring a connector attached to the cable, the device comprising: a temperature sensor for sensing a measured temperature at a position a known distance along the cable from the connector; a controller for recording the measured temperature from the temperature sensor while the connector is in use, and for identifying a potential fault condition in the connector based on the measured temperature and the position. In this way, an apparatus is provided for implementing the above method. In embodiments, the device may further comprise a mount for mounting the temperature sensor to the cable at the position the known distance along the cable from the connector.

In embodiments, the controller is further configured to generate an alert in response to identifying the potential fault condition. For example, in embodiments, temperature data may be transmitted from a local controller to a remote controller for remote monitoring of the connector status. In embodiments, the local controller may include a router for transmitting data via the internet. The router may be a satellite or cellular router. In such arrangements, status alerts may be generated at the remote server, for example, to alert an onshore repair team in the event of a fault.

In embodiments, the potential fault condition comprises one or more of: the connector's temperature exceeding a first threshold, and the connector's temperature exceeding a second threshold for a predetermined duration.

In embodiments, the controller is configured to identify a potential fault condition by estimating the connector temperature using the measured temperature and the position.

In embodiments, the controller is configured to calculate the estimated connector temperature by translating the measured temperature to the estimated connector temperature using a model.

In embodiments, the device further comprises a cable mount for mounting the temperature sensor to an outer sheath of the cable. In this way, the sensor may be mounted to the outer surface of the cable, without needing to compromise the integrity of the stock cable by exposing any internal layers. As such, the sensor may be easily fitted or adjusted, without needing a specialist technician.

In embodiments, the device comprises a plurality of temperature sensors for mounting to a respective plurality of cables at positions known distances along their respective cables from their respective connectors, and for sensing respective measured temperatures at those positions; and wherein the controller is for recording the measured temperatures from the plurality of temperature sensors while the connectors are in use, and for identifying a potential fault condition in one or more of the connectors based on the measured temperatures and the positions of the respective temperature sensor on their respective cable. In this way, a plurality of connectors connected into a switchgear may be monitored simultaneously using a common controller.

In embodiments, the controller is configured to identify a potential fault condition based on identifying a difference in concurrent changes of the measured temperatures for two or more of the plurality of temperature sensors.

In embodiments, the controller may be remote to the wind turbine.

In embodiments, the temperature sensor includes one of a thermocouple, a resistance temperature detector, a thermistor, a semiconductor-based integrated circuit temperature sensor, and an infrared camera.

Illustrative embodiments of the present invention will now be described with reference to the accompanying drawings in which:
Figure 1 shows an illustrative T-connector;
Figure 2 shows an isometric view of the front part of an example switchgear unit having three T-connectors connected to it; and
Figure 3 shows a schematic view of an offshore wind turbine incorporating a wind turbine cable connector monitoring device according to an illustrative embodiment of the invention.

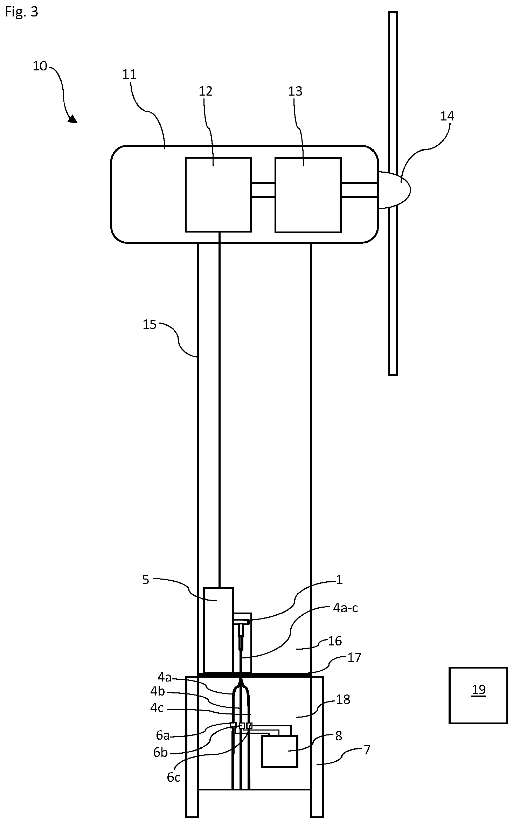

Figure 3 shows a simplified diagram of a wind turbine 10 fitted with a wind turbine cable connector monitoring device according to an illustrative embodiment. In this example, the wind turbine 10 is an offshore wind turbine. The wind turbine 10 includes a tower 15 which is mounted to a transition piece 7, which is in turn attached to a monopile (not shown). The tower 15 supports a nacelle 11 containing a generator 12 connected to a gearbox 13, which is driven by a rotor 14. As the rotor 14 turns in the wind, the generator 12 generates an electrical current which is fed to a switchgear 5 located on an internal platform 17 at the base of the tower 15 or in the transition piece 7.

A plurality of electrical cables 4a-c connect the turbine to a collector grid, which may include a number of other wind turbines in a wind turbine field. The cables 4a-c are connected into the switchgear 4 using respective T-connectors 1 within the interior 16 of the tower 15. The cables 4a-c are routed to the switchgear 5 from a cable routing area 18 located in the transition piece 7 beneath the platform 17.

The T-connector monitoring device is provided within the cable routing area 18 and comprises a local controller 8 and a plurality of temperature sensors 6a-c associated with individual ones of the cables 4a-c. Each temperature sensor 6a-c is for measuring the temperature of its respective cable 4a-c at a predetermined measurement position on the cable within the cable routing area 18. This cable temperature data is fed to the local controller 8. The local controller 8 is in communication with a remote controller 19, and the logged data is transmitted using a router at the local controller 8 to the remote controller 19 via the internet for processing.

The remote controller 19 receives the cable temperature data indicating the temperature of each cable 4a-c at the predetermined measurement position on the cable and processes this to generate an estimate of the temperature of the respective T-connector 1a-c. That is, each predetermined measurement position is a known distance from its respective T-connector 1. For example, in embodiments, each of the temperature sensors 6a-c is 0.3-3 meters from its respective T-connector 4a-c. The remote controller 19 applies a model to convert this measured temperature into an estimated temperature at the T-connector itself. The complexity of the model may vary in different embodiments. In more basic embodiments, the model may comprise a lookup table with measured temperatures correlated to estimated T-connector temperatures based on known test data. Conversely, other embodiments may comprise more advanced models which take into account one or more of the heat propagation properties of the cable material, the ambient temperature conditions, and the rate of temperature change detected. For example, the speed of the change in a measured temperature may be used to identify a potential fault condition. For instance, a potential fault condition may be identified in response to the detection of a rapid increase in temperature in one of the cables compared to a less rapid increase in the other cables.

The remote controller 19 analyses the estimated T-connector temperature to identify potential fault conditions. In this embodiment, for example, if the estimated temperature of the T-connector 1 exceeds a maximum temperature threshold, the remote controller 19 may flag this immediately as a potential fault condition indicating that damage may have occurred to the connector. Similarly, the remote controller 19 may also identify a potential fault condition if the T-connector temperature is maintained above an operating temperature threshold for an extended period. For example, the temperature of the T-connector 1 may be logged, and a potential fault condition may be identified once the T-connector has been operating for an accumulated number of hours above the predetermined threshold temperature. As such, the remote controller 19 may record the estimated temperature data for each of the T-connectors 1 and model this over time to evaluate the development of faults in the cables 4a-c.

In the event that a fault is identified by the remote controller 19, it may flag the respective T-connector 1 for repair by generating a notification alert for action by a repair technician. For example, the remote controller 19 may comprise a display for displaying the operating status of the connectors and any alert associated therewith. A technician may monitor the display and be prompted to inspect the T-connectors 1 in the event that a potential fault condition is identified. For instance, the display may identify which T-connector a fault is associated with, as well as diagnostic information about the nature of the fault. This may allow the technician to then visit the site to undertake a proactive repair operation on the identified T-connector 1 before breakdown occurs. This not only mitigates the risk of potential damage to other parts and electrical components, which could otherwise occur in an uncontrolled breakdown scenario, but also allows repair operations to be pre-emptively scheduled in advance, thereby minimising overall downtime when repairs are required.

Advantageously, because the temperature sensors 6a-c are located in the cable routing area 18, outside the switchgear unit, they can be fitted and maintained without needing to stop the wind turbine or to have a specialist, high-voltage accredited, repair technician access the switchgear assembly itself. Furthermore, the space in the cable routing area 18 is not limited in the same way as the space available in the switchgear assembly or the adjacent areas in the interior 16 of the wind turbine tower 15. Consequently, the connector monitoring system can be easily accommodated.

It will be understood that the embodiments illustrated above show applications of the invention only for the purposes of illustration. In practice the invention may be applied to many different configurations, the detailed embodiments being straightforward for those skilled in the art to implement.

For example, in the above embodiment, measured temperature data is collated by the local controller and transmitted to the remote controller for processing. As such, a distributed controller is provided, with data logging functions being performed locally and analysis functions being performed at a remote location. For example, the remote controller may be provided as an onshore monitoring terminal which analyses data from a number of wind turbines. However, it will also be understood that other embodiments may be provided where the local controller within the wind turbine structure also performs data analysis. That is, the local controller located within a wind turbine may comprise a computer for analysing the logged data and identifying potential fault conditions. For instance, the computer may identify potential faults based on applying a fault detection model to the logged data. By performing local processing, a technician visiting the wind turbine may perform a status check, as well as review historical data, while on site to verify the observed status of the connectors. In such embodiments, it will be understood that the processed data or analysis results may also be transmitted to a remote server for additional analysis and/or compliance recording.

The remotely transmitted data may be used for logging trends at a central server over longer periods. It will also be understood that such logged data may be collated from a number of wind turbines, and may also be grouped based on wind turbines in the same string or park. This may allow long-term temperature responses and connector performance to be assessed. Issues detected following a physical inspection of the connectors by a technician may also be recorded and analysed in conjunction with logged temperature data to identify fault patterns. In embodiments, a fault prediction model for predicting future faults may be generated based on identified fault patterns. For instance, in embodiments, a server may include a machine learning algorithm for developing a model which associates measured temperature patterns with the identification of future faults.

It will also be understood that although in the illustrative embodiment, a plurality of temperature sensors are provided, embodiments may also be implemented using fewer sensors, with one or more of the sensors capable of measuring multiple individual cable temperatures. For example, a single thermal imaging camera may be used with a field of view directed at the cables, and image processing at the controller may be used to determine individual cable temperatures at the predetermined measurement positions for each cable based on their location in the images. Conversely, in other embodiments, more than one temperature sensor may be associated with each cable, with different sensors associated with different predetermined measurement positions on the cable. In such embodiments, processing at the local and/or remote controller may allow measurements from the multiple sensors to provide an improved confidence in the estimated connector temperature.

It will also be understood that in embodiments, temperature sensors across different cables at the same site may be used in combination to identify potential faults based on relative deviations between them. That is, it would be expected that cables attached to the same switchgear would exhibit similar temperature responses under the same operating conditions. Accordingly, in scenarios where a pronounced temperature increase is detected on one of the cables, this may indicate a connector fault associated with this cable. This thereby allows fault detection even in the absence of precise temperature measurements, and hence would allow fault detection even if the temperature sensors are uncalibrated.

It will also be understood that the cable being monitored may be provided as a single cable, or as a single core within a multi-cable package, such as a 3-phase cable. Such 3-phase cables typically comprise three single cores which are bundled together in a protective package for laying on the seabed, but are split into 3 single cables at the wind turbine.

It will also be understood that the measured temperature data may be logged in combination with other measurements, including the power, voltage and/or current being conducted through the respective cables. As such, this data may be used in combination for more advanced fault detection identification, for example by identifying a decrease in current correlated with a measured temperature increase to identify a potential fault condition. At the same time, the combination of data may be used to identify potential faults in the temperature sensor. For instance, if a change in load on the cable does not correlate with a change in temperature, the controller may flag this as a potential sensor fault. As such, the power, voltage and/or current may be used as input factors in the fault prediction model. Equally, in some embodiments, the fault prediction model may be trained based on using power, voltage and/or current measurements, but without requiring these as input factors in the applied model. As such, fewer data inputs may be required in use, and more robust fault predictions may be achieved using simplified processing.

Finally, it will also be understood that it is also possible to monitor for potential fault conditions in joints in the wind turbine cable. That is, if a section of original cable is replaced, an inline joint may be attached to connect a length of new cable. The monitoring device may therefore be used to identify fault conditions in the inline joint as a cable connector.

## Claims

1. A wind turbine cable connector monitoring method for monitoring a connector attached to a cable, the method comprising the steps of:
sensing a measured temperature at a position on the cable a known distance along the cable from the connector while the connector is in use; and
identifying a potential fault condition in the connector based on the measured temperature and the position.

2. A method according to claim 1, further comprising the step of generating an alert in response to the identification of the potential fault condition.

3. A method according to claim 1 or 2, wherein the potential fault condition comprises one or more of: the connector's temperature exceeding a first threshold, and the connector's temperature exceeding a second threshold for a predetermined duration.

4. A method according to any preceding claim, wherein the step of identifying a potential fault condition comprises the step of estimating the connector temperature using the measured temperature and the position.

5. A method according to any preceding claim, wherein the step of estimating the estimated connector temperature comprises translating the measured temperature to the estimated connector temperature using a model.

6. A method according to claim 5, wherein the model accounts for one or more of the heat propagation properties of the cable, the heat properties of the cable material, ambient temperature conditions, and a detected rate of change in measured temperature.

7. A method according to any preceding claim, wherein the step of identifying a potential fault condition comprises identifying a difference in a change of the measured temperature compared to a concurrent change in measured temperature associated with another connector.

8. A wind turbine cable connector monitoring device for monitoring a connector attached to a cable, the device comprising:
a temperature sensor for sensing a measured temperature at a position a known distance along the cable from the connector;
a controller for recording the measured temperature from the temperature sensor while the connector is in use, and for identifying a potential fault condition in the connector based on the measured temperature and the position.

9. A wind turbine cable connector monitoring device according to claim 8, wherein the controller is further configured to generate an alert in response to identifying the potential fault condition.

10. A wind turbine cable connector monitoring device according to claim 9, wherein the potential fault condition comprises one or more of: the connector's temperature exceeding a first threshold, and the connector's temperature exceeding a second threshold for a predetermined duration.

11. A wind turbine cable connector monitoring device according to any one of claims 8-10, wherein the controller is configured to identify a potential fault condition by estimating the connector temperature using the measured temperature and the position.

12. A wind turbine cable connector monitoring device according to claim 11, wherein the controller is configured to calculate the estimated connector temperature by translating the measured temperature to the estimated connector temperature using a model.

13. A wind turbine cable connector monitoring device according to any one of claims 8 to 12, further comprising a cable mount for mounting the temperature sensor to an outer sheath of the cable.

14. A wind turbine cable connector monitoring device according to any one of claims 8 to 13, wherein the device comprises a plurality of temperature sensors for mounting to a respective plurality of cables at positions known distances along their respective cables from their respective connectors, and for sensing respective measured temperatures at those positions; and
wherein the controller is for recording the measured temperatures from the plurality of temperature sensors while the connectors are in use, and for identifying a potential fault condition in one or more of the connectors based on the measured temperatures and the positions of the respective temperature sensor on their respective cable.

15. A wind turbine cable connector monitoring device according to claim 14, wherein the controller is configured to identify a potential fault condition based on identifying a difference in concurrent changes of the measured temperatures for two or more of the plurality of temperature sensors.
